# EUROPEAN PATENT APPLICATION

(11) **EP 4 592 522 A1**
(43) Date of publication of application: **30.07.2025**
(21) Application number: 25153829.4
(22) Date of filing: 24.01.2025
(51) Int. Cl.: F03D 13/40

(54) **LOAD CARRYING ASSEMBLY**

(30) Priority: 26.01.2024 NO 20240072
(71) Applicant: Andersen Industrimodeller, Tron Andersen, 2067 Jessheim (NO)
(72) Inventor: ANDERSEN, Tron, 2067 JESSHEIM (NO)
(74) Representative: Onsagers AS

(57) **Abstract**

Load carrying assembly (10), comprising a plurality of length sections of used wind mill blades (11) arranged in a preferably symmetrical structural pattern around a common longitudinal axis. The wind mill blade sections are attached to one another by a plurality of spaced apart connection elements (12, 13, 14). The structural pattern is typically symmetrical around a central axis.

## Description

### Background

In search for renewable energy sources, utilization of wind power is one of the main areas that has been utilized already for some decades. The main construction type for utilization of wind power has the form of towers with large propellers typically of three blades and a typical length of 30-50 meters, some even longer.

Generally, the utilization of wind power in this manner is considered to be a success and today, many thousands wind mills for power generation are used over most of the world. As with all other technical equipment, also the wind power blades have a limited life-span and eventually needs to be replaced. The blades are exposure to sun, rain, hail and varying amounts of wind during varying weather conditions, combined with a (rotational) speed near the wing-tip of several hundred kilometres per hour. After a period of around 20-25 years, the wind power blades therefore have to be replaced.

In this connection it should be noted that in spite the fact that the wind power blades are hollow structures, their weight is still in the region of 10 - 14 000 kg. Replacing the blades of just one wind mill thus generates waste in the magnitude of up to at least 35 000 kg.

Secondary use of the wind power blades is typically, after grinding, as a reinforcing component in concrete.

CN 219213780 U (2023) is a utility model concerning wind power blade recovery system. The system includes means for cutting the blades into blocks, serially connected steps for crushing the blocks into particles and coarse particles into finer particles, a floatation device, and a cyclone separator. Generally, the system converts the blades to fine particles to be used for any convenient purpose.

CN 219190913 U (2023) is another utility model based on the same general concept as CN '780 above

CN 117019357 A (2023) concerns a transportable waste wind power blade processing station in which the wind power blade is cut into multiple sections and transferred to a crushing unit in which it is divided into finer pieces. The main objective of the invention is to provide a means to process the wind power blades to particles at the site at which they are disassembled in order to avoid the problems of costly and complicated transportation of the blades to a remote station. CN 117019845 A (2023) is also related to the handling of used wind power blades involving dividing to pieces thereof and collecting glass fibres and core materials from the blades.

CN 115611609 A (2023) concerns a method for the manufacture of bricks from waste wind turbine blades.

CN 115465867 A (2023) concerns a method for producing white carbon black from a.o. waste wind turbine blades.

All prior art seems to involve dividing or crushing the used (waste) wind power blades when they can no longer serve their initial purpose.

There are about 200 000 wind mills for power generation in the world today, probably a little more and assuming a lifetime for the blades - or the entire windmill - of about 25 years, 4% of this number, i.e. about 8 000 wind mills, comprising 24 000 blades will be dismantled each year, representing about 500 million kg of wind mill blades (assuming average blade weight 21000 kg). Even though use as a component in concrete is a meaningful secondary use of the wind mill blades, other kinds of use may be even more meaningful and have a higher value.

### Objective

It is an objective of the present invention to find alternative secondary use of used wind mill blades, preferably of high-value use.

### The present invention

The present invention concerns a load carrying structure utilising used wind mill blades as a major component thereof. More concretely, the present invention is a load carrying assembly as defined by claim 1.

The present invention makes use of the used wind mill blades in a manner that does not require the blades to be milled to small particles, a process requiring substantial amounts of energy but rather that the used blades are reused in a manner in which their inherent strength and quality, hereunder corrosion resistance and elasticity, comes to use once more. While each of the blades or blade sections exhibits a comparatively high degree of elasticity, the assembly according to the present invention is comparatively rigid and well suited for carrying even high loads.

The entire blade may be used in the assembly, but more preferably, a section of the blade typically from its proximal end, that being the end attached to the rotor of the wind mill, since that end is the stronger end of the blade. For some applications it may be desired to cut off both ends of the blades and use just a middle section for the purpose of the present invention.

The desired section may be cut off using any kind of saw appropriate for the purpose and the open end of the blade section to be used for the assembly, may be provided with any kind of protective sealing or cap to prevent water and dirt from entering the blade section.

In some embodiments, the blade section may be wholly or partially filled with concrete, such as light-weight concrete to increase its rigidity, but in consideration that at least two and more preferably three blades are combined in the assembly, that is most often not required and would add cost and weight to the overall assembly.

The distal end of the blade, i.e. the cut-off part of the blade, not to be included in the assembly of primary concern, may be used in smaller assemblies according to the present invention, for less demanding tasks.

The load carrying assembly according to the present invention is typically arranged symmetrically around a longitudinal axis along which the forces will be applied. Thus, the axis will typically have a vertical orientation in the position at which the assembly will be used, to be able to withstand the weight load from any structural element to be held by the assembly. Typically, the proximal end of the blades may be mounted to a circular base plate when the assembly counts three blades or blade sections, the attachment points being spaced apart 120 degrees along an imaginary circular line on the base plate.

For assemblies that counts four blades or blade sections, a square or a circular base plate may be used and the attachment points on the base plate will be separated by 90 degrees along an imaginary circular line thereon. In a similar manner, assemblies counting six blades or blade sections will be attached to a base plate with an angular separation of 60 degrees between each adjacent blade (section). A typical design comprises 2 to 6 blades or blade sections, and more preferred 3 to 6 while larger designs are also contemplated.

For all embodiments of the load carrying assembly according to the present invention, it is an option to have a physical representation of the centre axis in the form of a pipe or rod, most typically made of metal, while fibre reinforced composite structure is also an option.

In addition to the base plate, which is also denoted a first connection element due to its function to connect the blade sections at their first (proximal) ends, the assembly includes at least another connection element at the upper end of the assembly. Depending upon the length (height) or extension of the assembly along its longitudinal axis, the assembly typically includes at least one intermediate connection device between the base plate and the upper connecting element.

The connection elements may be discrete elements, but they may also be connected by struts or bars in order to distribute forces applied to the any one of them evenly to the entire structure. The number of connection elements is typically from 3 to 12, more preferred from 3 to 9 irrespective of whether the blade sections are undivided over the height of the assembly or not. The connection elements are typically made of a material selected among metal, composite synthetic material and a combination thereof. The overall length extension (height) of the assembly is typically from 4 to 70 meters, preferably from 6 to 50 meters and more preferred from 8 to 40 meters.

Naturally, the assembly and in particular the used blade sections constituting main elements thereof, need(s) to be maintained and surveyed at a regular basis in order to safeguard the integrity of the structure. It is worth noticing that the static use of the assembly does not impose the same wear and tear as does the use of the blades on a windmill where the tip of the blades may travel at a speed of more than300 kilometres per hour.

While the load carrying assembly of the present invention is suitable for use as a singular tower for various sorts of installations that need to be arranged at an elevation up to around 60 meters and possibly more, it may also be used in pairs, threefolds, quadruples, etc. for supporting bridges or the like having a substantial horizontal extension. On the other hand, where especially high "towers" are required, the load carrying assembly of the present invention may serve as the lower part of such a tower, the upper part being any kind of load carrying construction adapted to be arranged on top of the load carrying assembly of the present invention.

For supporting walls or the like against sideways displacement, where the expected forces are sideways and always in the same direction, configurations deviating from a symmetrical pattern around the length axis may be employed.

Below, the invention is described in further detail in the from of a non-limiting embodiment illustrated by a drawing.
Figure 1 is a schematic and simplified perspectival view of an embodiment of the present invention.
Figure 2 is a top view of a detail of the embodiment of figure 1.
Figure 3 is a top view of an alternative variant of the detail of figure 2.
Figure 4 is a schematic and simplified perspectival view of an embodiment slightly different from the one of figure 1.
Figure 5 is a schematic and simplified perspectival view of a module of a load carrying assembly according to the present invention.

By schematic and simplified is understood that only the principles of the invention are described, that the features may be rudimentary illustrated and that functional, non-inventive elements typically present in real-life embodiments of the invention may be omitted for simplification purposes.

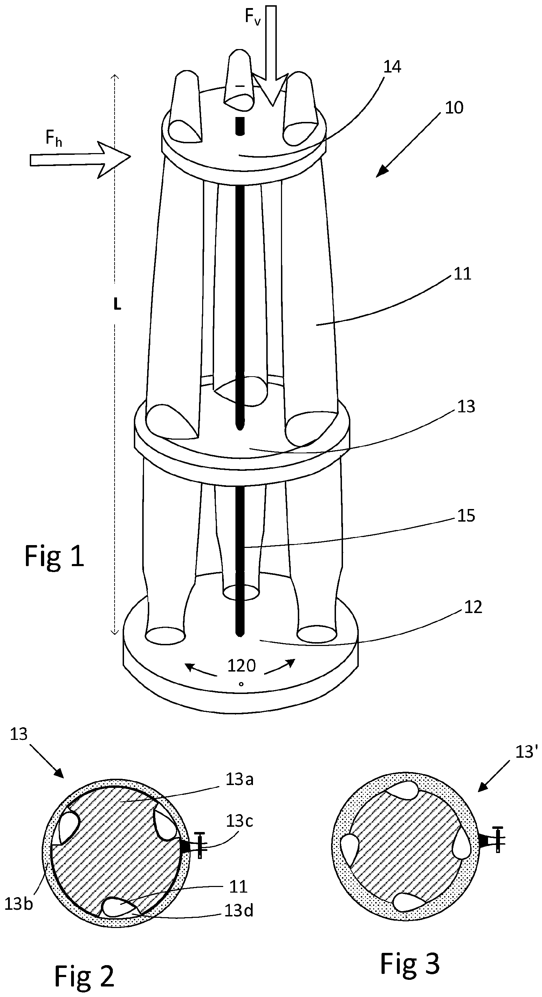

Figure 1 illustrates a load carrying assembly 10 according to the present invention. It comprises similar length sections of three used wind power blade section 11 assembled to a tower-like structure. The assembly furthermore comprises a first connection element 12 in the form of a mainly circular base plate, a second (intermediate) connection element 13 also having the general shape of a disc or plate and a third connection element 14 also having the general shape of a disc, the latter being positioned near the upper end of the sections of the wind power blades.

All sections of the wind power blades for one load carrying structure are of same length L, a length extension typically constituting between one third and the entire length of the blade, the remainder - if any - of the blades being cut off at their distal (tip) end. The blade sections 11 are arranged symmetrically around a centre axis which in the illustrated embodiment is physically represented by a non-mandatory centre piece 15, typically in the form of a rod or pipe, made in any convenient material such as metal or composite materials, optionally also comprising concrete and synthetic materials with or without protective coatings to enhance corrosion resistance, UV resistance, and water resistance. When used, the centre rod or pipe may be assembled from shorter sections, like sections of a drilling string, exhibiting an overall extension similar to the blades or blade sections in question. In some embodiments the centre piece may be quite wide and house a staircase or an elevator.

The connection elements 12, 13, 14 may be uniform, undividable elements. The first or lowermost connection element may typically be an undividable base plate of severe strength since in the end, it will support the entire weight of the assembly and ay least part of the structure supported by the inventive assembly. Typically, all connection elements above the first connection element, such as connection element 13 of Figure 1, is assembled from at least two separate pieces as explained below, allowing the connection element to be assembled at the connection point.

The connection element 12 may have circular recessions designed to receive a circular proximal and of a blade, originally made for attachment to the rotor of a wind mill. The connection elements 13 and 14 may have profiled through openings of a size and profile corresponding to the size and profile of the blade. The connection elements may have a size and shape as shown in Figure 1, implying that the overall shape of the assembly is tapered from a comparatively wide lower end to a narrower upper end. On the other hand, the upper connection element, or any connection element above the first and lowermost one, may be extended e.g. in order to host a number of people thereon or even a restaurant or the like, accommodating people at an elevation at which there is a view over the surrounding landscape. For such a design, the outer shape of the assembly may typically be cylindrical from its lower end to its upper end. The centre rod or pipe 15 may be designed to accommodate an elevator in order to transport people from the ground to an elevated position in the assembly, such as e.g. the uppermost connection element 14.

Typically, the assembly of the present invention needs to be able to withstand vertical forces, caused by weight as well as horizontal forces Fₕ caused by wind and/ or other horizontal forces such as pulling forces from cables. A vertical load Fᵥ applied to the assembly as illustrated by Figure 1, is basically applied to the uppermost connection element 14. In order to allow a distribution of this force also to other connection elements and subsequently onto blade sections, the connection elements 12, 13, 14 may be interconnected by cross-brace struts or the like.

It is worth noticing that the first and lowermost connection element 12 does not need do form a baseplate of the load carrying assembly. Thus, the lowermost connection element 12 may be elevated a distance above ground, whereas the blade sections as such, with or without individual broadening "feet", constitute the elements resting on the ground.

The vertical load Fᵥ is typically embodied by an installation to be carried by the inventive load carrying assembly, while - in some cases - an additional load carrying structure of any appropriate kind may be put on top of the inventive load carrying assembly to increase the overall height, the installation in question being put on top of that additional structure.

If an assembly is intended for stand-alone use, it may be provided with a substantially extended base plate for enhanced stability or provided with guying means (not shown) strapped down to the ground in different directions from one of the connection elements, such as from intermediate connection element 13.

While the blade or blade sections 11 in figure 1 are shown in an arrangement where a vertical plane through the centre of the centre rod or pipe 15 and through the centre of a blade section 11 at the lowermost connection element 12, will also fall within the centre of the same blade section at each of the other connection elements 13, 14, this is not a requirement. Each of the blade sections may be "tilted" in relation to the centre rod and being closer to the centre rod at a vertical mid-point than at the lowermost and uppermost end points of the blade section in question.

Figure 2 is a top view of an embodiment of the connection element 13 of Figure 1. In this embodiment, the connection element 13 is assembled from two different segments, a centre segment 13a and a peripheral segment 13b, the latter having the form of a ring that may be opened and closed. In its closed position, the ring 13b may typically be tensioned by the use of a tensioning device 13c- The ring 13b is typically made of a material, such as band steel, with a high tensile strength and limited flexibility. The areas at which the blade sections 11 are in contact with the connection elements 13a, 13b, may be provided with soft and/ or high frictional cushioning material. While it may be favourable to secure all the blade sections to the connecting elements using a ring type element 13b that, after assembly, constitutes the periphery of the connecting element 12, 13, or 14 in question, it is also within the framework of the present invention to attach and secure the blade elements, temporarily or permanently, with discrete attachment members, one for each blade section.

While drawings 1 and 2 shows blade sections extend as unitary, undivided sections all the way from the lowermost connection element 12 to the uppermost connection element 14, it is also within the scope of the present invention to assemble the inventive load carrying assembly from blade sections that extend for part of the overall height, such as one half or one third of the overall height of the assembly. The numbers and positions of the connection elements would be adapted accordingly, typically such a that the upper end of each blade section is terminated at an elevation of one of the connection elements. If each blade section covers just the distance (height) between two adjacent connection elements, the stability of the overall structure would be significantly impaired unless compensated by appropriate use of pressure struts and tension braces.

Figure 3 illustrates a variant 13' embodying openings for four blade elements. It may be sectioned in a similar manner to the embodiment of figure 2, though in four sections rather than three. The variant of 13' will naturally only be used in combination with upper and lower connecting elements also exhibiting four openings/ recesses and four blade sections, a combination not illustrated as such, but within the scope of the present invention.

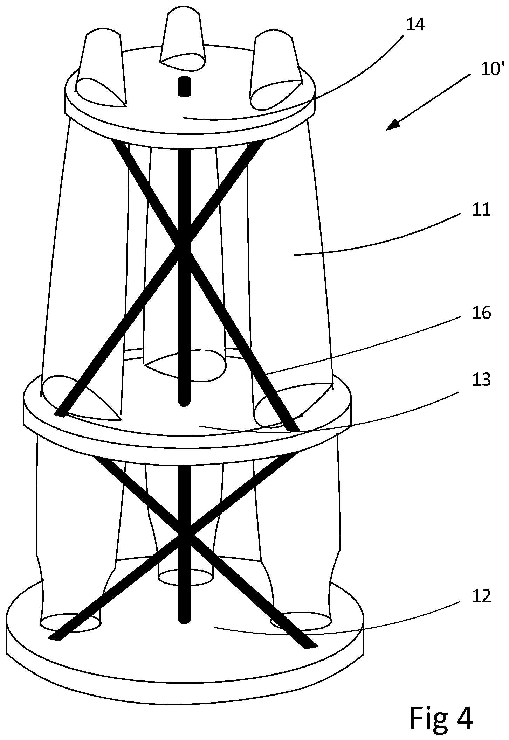

Figure 4 illustrates a load carrying assembly 10 according to the present invention. The sole distinguishing feature compared with the embodiment of Figure 1 is the presence of cross-brace struts 16 between the adjacent connection elements 12-13 and 13-14. Although not visible in the drawing, such struts, when used, are typically arranged in a symmetrical pattern around the centre rod or pipe 15, such as in each space between adjacent blade sections.

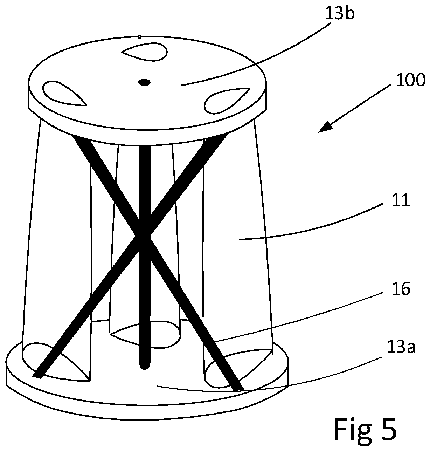

Figure 5 illustrates a module of a load carrying assembly according to the present invention. It is comprised by a lower connection element 13a, which may or may not be the lowermost connection element of the load carrying assembly and an upper connection element 13b, which may or may not be the uppermost connection element of the load carrying assembly. Elements as shown may be prefabricated and transported to the site of use and there be stacked on top of one another to desired height. The modules must be securely attached to one another by any convenient means, such as by a number of bolts along the periphery of the connecting elements when the connection elements are disc shaped.

The present invention as defined by the appended claims represent a novel and unique utilization of used wind mill blades that requires less energy, provides a high-value construction and it reduces the need for and use of concrete for load carrying structures.

The invention is solely defined by the claims.

## Claims

1. Load carrying assembly (10), **characterised in** comprising a plurality of length sections of used wind mill blades (11) arranged in a structural pattern around a common longitudinal axis, attached to one another by a plurality of connection elements (12, 13, 14).

2. Load carrying assembly (10) as claimed in claim 1, wherein the structural pattern is a symmetrical pattern around a centre axis.

3. Load carrying assembly (10) as claimed in claim 1 or 2, wherein the plurality of wind power blade sections (11) counts a number from 2 to 6, more preferred from 3 to 6.

4. Load carrying assembly (10) as claimed in any one of the preceding claims, wherein the plurality of spaced apart connection elements counts a number from 3 to 12, more preferred from 3 to 9.

5. Load carrying assembly (10) as claimed in any one of the preceding claims, having an overall length extension from 4 to 70 meters, more preferred from 6 to 50 meters, even more preferred from 8 to 40 meters.

6. Load carrying assembly (10) as claimed in any one of claims 2-5, further comprising a longitudinal centre piece (15) of a length corresponding to the length of the used wind power blades or blade sections (11), defining the symmetry centre of the load carrying assembly (10).

7. Load carrying assembly (10) as claimed in any one of the preceding claims, wherein the connection elements (12, 13, 14) are made of a material selected from the group consisting of metal, composite synthetic material and a combination thereof.

8. Load carrying assembly (10) as claimed in any one of the preceding claims, wherein the outer shape thereof is tapered from a wide lower end towards a narrow upper end.

9. Load carrying assembly (10) as claimed in any one of claims 1 to 7, wherein the outer shape thereof is cylindrical from its lower end towards its upper end.

10. Load carrying assembly (10) as claimed in any one of the preceding claims, wherein the connection elements (12, 13, 14) are interconnected by load distributing elements.

11. Load carrying assembly (10) as claimed in claim 10, wherein the load-distributing elements are cross-brace struts (16).
